# FASCICULE DE BREVET EUROPEEN

(11) **EP 3 233 530 B1**
(45) Date de publication et mention de la délivrance du brevet: **25.03.2020**
(21) Numéro de dépôt: 15817131.4
(22) Date de dépôt: 14.12.2015
(51) Int. Cl.: B60C 1/00, C08L 7/00, C08L 9/00, C08K 3/36, C08K 3/04

(54) **FLANC POUR PNEUMATIQUE**
REIFENSEITENWAND
TYRE SIDEWALL

(30) Priorité: 16.12.2014 FR 1462505
(43) Date de publication de la demande: 25.10.2017
(73) Titulaire: Compagnie Générale des Etablissements Michelin, 63000 Clermont-Ferrand (FR)
(72) Inventeur: BELIN, Cécile, 63040 Clermont-Ferrand Cedex 9 (FR); GONCALVES, Olivier, 63040 Clermont-Ferrand Cedex 9 (FR)
(74) Mandataire: Cohen, Sylvia
(86) Numéro de dépôt international: PCT/EP2015/079550
(87) Numéro de publication internationale: WO 2016/096695

(56) Documents cités:
- EP-A1- 1 459 907
- US-A1- 2014 090 764
- DATABASE WPI Week 201465 Thomson Scientific, London, GB; AN 2014-R71984 XP002742111, & JP 2014 185340 A (YOKOHAMA RUBBER CO LTD) 2 octobre 2014 (2014-10-02)
- DATABASE WPI Week 201472 Thomson Scientific, London, GB; AN 2014-T68290 XP002742112, & JP 2014 201281 A (SUMITOMO RUBBER IND LTD) 27 octobre 2014 (2014-10-27)

## Description

La présente invention concerne un flanc pour pneumatique à base d'une composition de caoutchouc, et plus particulièrement pour des pneumatiques utilisés pour le Génie Civil.

Les flancs des pneumatiques utilisés pour le Génie Civil représente environ 15% de la masse totale des pneumatiques, donc une masse importante, qui lorsque la bande de roulement est partiellement usée, a un impact très important sur la résistance au roulement du pneumatique.
Il est donc intéressant d'essayer de diminuer l'hystérèse des flancs de tels pneumatiques afin d'avoir un impact sur la résistance au roulement de ces pneumatiques. Cependant cette baisse de l'hystérèse doit pouvoir être réalisée sans détériorer les autres propriétés des compositions pour flanc, en particulier des propriétés mécaniques telles que la résistance à la fatigue et les propriétés aux limites et plus particulièrement la résistance à la fissuration.
En effet, les flancs de pneumatique Génie Civil sont soumis à de très fortes sollicitations à la fois en terme de déformation en flexion, d'agression, et de thermique.

Ces sollicitations statiques ou dynamiques prolongées des flancs en présence d'ozone, font apparaître des craquelures ou des fissures plus ou moins marquées dont la propagation sous l'effet de la persistance des contraintes peut provoquer une avarie importante du flanc concerné. Il est donc important que les compositions constituant les flancs de pneumatique pour le Génie civil en particulier, présentent de très bonnes propriétés mécaniques, et donc généralement avec de forte teneur en charge renforçante.

Ainsi la publication US2013/0112331 décrit à la fois des compositions classiques des flancs pour pneumatiques pour le Génie Civil, comprenant comme charge renforçante du noir de carbone avec un taux de 50 parties pour cent parties d'élastomère et des compositions améliorées présentant un taux total de charge renforçante de 60 pce constitué par 30 pce de noir de carbone et 30 pce de silice.

Les demanderesses ont découvert de façon surprenante et au contraire des connaissances de l'homme du métier, que des compositions faiblement chargées à base majoritairement de silice permettaient d'obtenir des flancs présentant à la fois une hystérèse réduite tout en conservant de très bonnes propriétés mécaniques.

L'invention a donc pour objet un pneumatique destiné à équiper des véhicules de Génie Civil comportant un flanc ayant une composition de caoutchouc à base d'au moins un coupage de polyisoprène, caoutchouc naturel ou polyisoprène de synthèse, et de polybutadiène BR, une charge renforçante comprenant du noir de carbone et de la silice, un système de réticulation, caractérisé en ce que la charge renforçante comprend majoritairement de la silice, que le taux de silice va de 20 à 40 parties pour cent parties d'élastomère, pce, et le taux de noir de carbone est inférieur ou égal à 5 pce et que le taux total de charge renforçante est inférieur ou égal à 45 pce.

Avantageusement, le taux total de charge renforçante est inférieur ou égal à 40 pce.

De préférence, le taux de silice est inférieur ou égale à 35 pce, plus préférentiellement le taux de silice est inférieur ou égal à 30 pce.

Avantageusement, le taux de caoutchouc naturel ou de polyisoprène de synthèse va de 20 à 80 pce et le taux de BR va de 20 à 80 pce.

Selon un mode de réalisation de l'invention, le taux de caoutchouc naturel ou de polyisoprène de synthèse va de 50 à 80 pce.

### I. MESURES ET TESTS UTILISES

Les compositions de caoutchouc sont caractérisées, avant et après cuisson, comme indiqué ci-après.

### Essais de traction

Ces essais permettent de déterminer les contraintes d'élasticité et les propriétés à la rupture ; ceux effectués sur les mélanges cuits sont réalisés conformément à la norme AFNOR-NF-T46-002 de septembre 1988.
On mesure à la température de 60°C ± 2°C, et dans les conditions normales d'hygrométrie (50 ± 5% d'humidité relative), selon la norme française NF T 40-101 (décembre 1979), les contraintes à la rupture (en MPa) et les allongements à la rupture (en %) sont également mesurés, l'énergie à la rupture (Energie Rupture) étant le produit de la contrainte à la rupture et de l'allongement à la rupture.

### Test de fatigue

La résistance à la fatigue, exprimée en nombre de cycle ou en unité relative (u.r), est mesurée de manière connue sur 12 éprouvettes soumises à des tractions répétées de faible fréquence jusqu'à un allongement de 75%, à 23°C, à l'aide d'un appareil Monsanto (type « MFTR ») jusqu'à rupture de l'éprouvette, selon les normes ASTM D4482-85 et ISO 6943.

Le résultat est exprimé en unité relative (u.r). Une valeur supérieure à celle du témoin, arbitrairement fixée à 100, indique un résultat amélioré c'est-à-dire une meilleure résistance à la fatigue des échantillons de caoutchouc.

### Propriété dynamique

La propriété dynamique tan(δ)max est mesurée sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz et à la température de 60°C, selon la norme ASTM D 1349 - 99. On effectue un balayage en amplitude de déformation de 0,1 à 50% (cycle aller), puis de 50% à 0,1% (cycle retour). Le résultat exploité est le facteur de perte (tan δ). Pour le cycle retour, on indique la valeur maximale de tan δ observée (tan(δ)max), entre les valeurs à 0,1% et à 50% de déformation (effet Payne).

### II- DESCRIPTION DETAILLEE DE L'INVENTION

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### Elastomère diénique

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

Les élastomères précités peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752).
On peut aussi citer comme élastomères fonctionnels ceux préparés par l'utilisation d'un amorceur fonctionnel, notamment ceux portant une fonction amine ou étain (voir par exemple WO 2010072761).
Comme autres exemples d'élastomères fonctionnalisés, on peut citer également des élastomères (tels que SBR, BR, NR ou IR) du type époxydés.

La matrice élastomérique de la composition conforme à l'invention comprend au moins :
- du caoutchouc naturel, NR, ou polyisoprène de synthèse, de préférence avec un taux allant de préférence de 20 pce à 80 pce,
- du BR, avec de préférence un taux allant de 20 à 80 pce.

On comprendra que par caoutchouc naturel ou polyisoprène de synthèse, qu'il peut s'agir de l'un seulement de ces élastomères ou d'un coupe de caoutchouc naturel et d'un ou plusieurs polyisoprène de synthèse.
De même, lorsque l'on parle de BR, il peut s'agir ici d'un ou plusieurs polybutadiènes.

Selon un mode de réalisation de l'invention, le taux de caoutchouc naturel ou de polyisoprène de synthèse va de 50 à 80 pce, et de préférence, le taux de BR va de 30 à 50 pce.

Selon un autre mode de réalisation de l'invention, le taux de BR va de 50 à 80 pce.

A titre de BR, conviennent les BR présentant un taux (% molaire) d'enchaînements cis-1,4 supérieur à 90%.

Selon un mode de réalisation de l'invention, la composition comprend au moins un autre élastomère diénique, choisi de préférence dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).
Plus préférentiellement cet autre élastomère diénique est constitué par un SBR avec un taux allant préférentiellement de 10 à 30 pce, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR).

La composition selon l'invention peut contenir un autre élastomère diénique. Les élastomères diéniques de la composition pouvant être utilisés en association avec tout type d'élastomère synthétique autre que diénique, voire avec des polymères autres que des élastomères, par exemple des polymères thermoplastiques.

### Charge renforçante - agent de couplage

On entend de manière connue par charge renforçante, une charge connue pour ses capacités à renforcer une composition de caoutchouc utilisable pour la fabrication de pneumatiques.
On trouve parmi ces charges renforçantes des charges organiques, telles que le noir de carbone et des charges inorganiques.

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("non-black filler") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (□OH), à sa surface, nécessitant en cela l'emploi d'un agent ou système de couplage destiné à assurer une liaison chimique stable entre l'élastomère et ladite charge.

On peut citer comme charge inorganique renforçante des charge du type siliceuse, telle que la silice, ou alumineuse, silice-alumine, oxyde de titane.

La charge renforçante pour la composition conforme à l'invention, comprend un coupage de noir de carbone et de silice, dans lequel la silice est majoritaire. Le taux total de charge renforçante étant inférieur ou égal à 45 pce, le taux de silice va de 20 *(?)* à 40 pce et le taux de noir de carbone inférieur ou égal à 5 pce.

De préférence le taux total de charge renforçante est inférieur ou égal à 40 pce, plus préférentiellement le taux de silice est inférieur ou égale à 35 pce et encore plus préférentiellement inférieur ou égal à 30 pce.

Comme noirs de carbone conviennent tous les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N400, N660, N683, N772). Les noirs de carbone pourraient être par exemple déjà incorporés à l'élastomère isoprénique sous la forme d'un masterbatch (voir par exemple demandes WO 97/36724 ou WO 99/16600).

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et «Ultrasil» 7005 de la société Degussa, les silices « Zeosil 1165MP », « Zeosil 1135MP », « Zeosil 1115MP » et « Zeosil Premium 200 MP » de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.
Précisons que la surface spécifique CTAB est déterminée selon la norme française NF T 45-007 de novembre 1987 (méthode B).

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

Pour coupler la charge inorganique renforçante, notamment la silice, à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 2 à 10 pce. Ce taux est aisément ajusté par l'homme du métier selon le taux de charge inorganique utilisé dans la composition.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 1 et 8 pce, en particulier entre 1 et 6 pce lorsque la composition de l'invention est destinée, selon un mode préférentiel de l'invention, à constituer une "gomme" (ou composition de caoutchouc) interne d'un pneumatique. L'accélérateur primaire de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs primaires sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés.

### Autres constituants

Les matrices de caoutchouc des composites conformes à l'invention comportent également tout ou partie des additifs habituellement utilisés dans les compositions de caoutchouc destinées à la fabrication de pneumatiques, tels que par exemple des agents anti-vieillissement, des antioxydants, des plastifiants ou des huiles d'extension que ces derniers soient de nature aromatique ou non-aromatique, notamment des huiles très faiblement ou non aromatiques (e.g., huiles naphténiques ou paraffiniques, huiles MES ou TDAE), des agents facilitant la mise en œuvre des compositions à l'état cru, , des agents antiréversion tels que par exemple l'hexathiosulfonate de sodium ou le N,N'-m-phénylène-biscitraconimide, des accepteurs et donneurs de méthylène (par exemple résorcinol, HMT ou H3M), des sels métalliques comme par exemple des sels organiques de cobalt ou de nickel.
L'homme du métier saura ajuster la formulation de la composition en fonction de ses besoins particuliers.

### Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 40°C C et 100°C, phase de finition au cours de laquelle est incorporé le système de réticulation ou vulcanisation.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels que des flancs de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Les exemples qui suivent illustrent l'invention, sans toutefois la limiter.

### III. EXEMPLES DE REALISATION DE L'INVENTION

### Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique (coupage NR et BR), la silice complétée par une faible quantité de noir de carbone, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme flancs de pneumatiques.

### Essais

Cet exemple a pour but de montrer l'amélioration de flancs de pneumatiques conformes à l'invention par rapport à des flancs d'un pneumatique témoin « classique » pour véhicule Génie Civil.

Les compositions de flancs de pneumatiques ont été fabriquées conformément au procédé détaillé dans le paragraphe précédent. Ces compositions détaillées dans le tableau 1 (où les quantités sont exprimées en pce, parties en poids pour cent parties d'élastomère) qui suit, diffèrent par la nature et la quantité de leur charge renforçante respective, ainsi que par la quantité de plastifiant utilisée.

Les formulations sont présentées dans le tableau 1 qui suit.

**Tableau 1**

| **Composition :** | **A** | **B** | **C** |
|---|---|---|---|
| NR (1) | 50 | 50 | 50 |
| BR (2) | 50 | 50 | 50 |
| Noir de carbone (3) | - | - | - |
| Noir de carbone (4) | 38 | 32 | 3 |
| Silice (5) | - | - | 29 |
| Agent de couplage (6) | - | - | 3 |
| Plastifiant (7) | 10 | 10 | 10 |
| Cire | 1 | 1 | 1 |
| Antioxydant (8) | 3 | 3 | 3 |
| ZnO | 2,5 | 2,5 | 2,5 |
| Acide stéarique | 1 | 1 | 1 |
| Soufre | 1 | 1 | 1 |
| Accélérateur (9) | 0,8 | 0,8 | 0,8 |

| | | | |
|---|---|---|---|
| (1) caoutchouc naturel; (2) BR avec 0.5% de 1-2 ; 1 à 1.5% de trans ; >98% de cis 1-4 (Tg = -108°C) ; (3) Noir de carbone N234 commercialisé par la société Cabot Corporation ; (4) silice « Zeosil 1165MP » commercialisée par la société Rhodia ; (5) agent de couplage TESPT ("Si69" de la société Degussa) ; (6) huile TDAE « Vivatec 500 » de la société Klaus Dahleke ; (7) N-1,3-diméthylbutyl-N-phénylparaphénylènediamine (Santoflex 6-PPD de la société Flexsys) ; (8) N-cyclohexyl-2-benzothiazyl-sulfénamide (Santocure CBS de la société Flexsys). | | | |

Ainsi les compositions A, B, et C sont définies comme suit :
- la composition témoin A est une composition de flanc de pneumatique de véhicule Génie Civil « classique » incluant un noir de carbone de grade 200,
- la composition B non-conforme à l'invention est une composition proche de la composition A, dans laquelle le taux de noir de carbone a été réduit significativement,
- la composition C conforme à l'invention est une composition dont le taux total de charge renforçante est identique à celui de la composition B mais qui comprend un taux de noir de carbone de 3 pce et à titre de charge renforçante majoritaire de la silice.

Les propriétés de caoutchouterie de ces trois compositions sont mesurées avant cuisson et après cuisson à 150°C pendant 60 minutes, les résultats obtenus sont portés sur le tableau 2.

**Tableau 2**

| **Composition :** | **A** | **B** | **C** |
|---|---|---|---|
| Allongement rupture (%) | 762 | 809 | 811 |
| Contrainte rupture (MPa) | 11,9 | 12 | 11 |
| MFTR | 58 | 48 | 92 |
| tanδₘₐₓ | 0,139 | 0,128 | 0,120 |

On constate que les trois compositions présentent de propriétés limites à la rupture équivalentes (valeurs des allongements à la rupture et contraintes à la rupture).
Pa contre le fait de diminuer significativement le taux de charge renforçante entre la composition témoin « classique » A (38 pce de noir de carbone) et la composition B (32 pce de noir de carbone) fait chuter très fortement la propriété de résistance à la fatigue (MFTR) même si les résultats sur l'hystérèse montrent une diminution positive. Cette très forte baisse de la résistance à la fatigue est un effet attendu par l'homme du métier en conséquence de la très forte diminution du taux de charge renforçante.

Or au contraire, étonnamment on constate que la composition C conforme à l'invention qui présente comme la composition B un très faible taux total de charge renforçante (mais avec de la silice majoritaire), permet néanmoins d'obtenir une résistance à la fatigue quasiment très supérieure à celle de la composition B, mais également très supérieure à celle de la composition témoin A.
De plus la composition C conforme à l'invention permet de baisser encore l'hystérèse par rapport à la composition B (qui présentait déjà une hystérèse significativement réduite par rapport à la composition témoin A).

## Revendications

1. Pneumatique destiné à équiper des véhicules de Génie Civil comportant un flanc ayant une composition de caoutchouc à base d'au moins un coupage de polyisoprène, caoutchouc naturel ou polyisoprène de synthèse, et de polybutadiène BR, une charge renforçante comprenant du noir de carbone et de la silice, un système de réticulation, **caractérisé en ce que** la charge renforçante comprend majoritairement de la silice, que le taux de silice va de 20 à 40 parties pour cent parties d'élastomère, pce, et le taux de noir de carbone est inférieur ou égal à 5 pce et que le taux total de charge renforçante est inférieur ou égal à 45 pce.

2. Pneumatique selon la revendication 1, dans lequel le taux total de charge renforçante est inférieur ou égal à 40 pce.

3. Pneumatique selon la revendication 1, dans lequel le taux de silice est inférieur ou égale à 35 pce.

4. Pneumatique selon la revendication 3, dans lequel le taux de silice est inférieur ou égal à 30 pce.

5. Pneumatique selon l'une quelconque des revendications 1 à 4, dans lequel le taux de caoutchouc naturel ou de polyisoprène de synthèse va de 20 à 80 pce et le taux de BR va de 20 à 80 pce.

6. Pneumatique selon la revendication 5, dans lequel le taux de caoutchouc naturel ou de polyisoprène de synthèse va de 50 à 80 pce.

7. Pneumatique selon l'une quelconque des revendications 5 ou 6, dans lequel le taux de BR va de 30 à 50 pce.

8. Pneumatique selon l'une quelconque des revendications 1 à 4, dans lequel le taux de BR va de 50 à 80 pce.

## Patentansprüche

1. Reifen zur Ausstattung von Erdbaufahrzeugen mit einer Seitenwand mit einer Kautschukzusammensetzung auf Basis von mindestens einem Verschnitt von Polyisopren, Naturkautschuk oder synthetischem Polyisopren und Polybutadien BR, einem verstärkenden Füllstoff, der Ruß und Kieselsäure umfasst, und einem Vernetzungssystem, **dadurch gekennzeichnet, dass** der verstärkende Füllstoff hauptsächlich Kieselsäure umfasst, der Kieselsäuregehalt im Bereich von 20 bis 40 Teilen pro hundert Teile Elastomer, phe, liegt und der Rußgehalt kleiner oder gleich 5 phe ist und der Gesamtgehalt an verstärkendem Füllstoff kleiner oder gleich 45 phe ist.

2. Reifen nach Anspruch 1, wobei der Gesamtgehalt an verstärkendem Füllstoff kleiner oder gleich 40 phe ist.

3. Reifen nach Anspruch 1, wobei der Kieselsäuregehalt kleiner oder gleich 35 phe ist.

4. Reifen nach Anspruch 3, wobei der Kieselsäuregehalt kleiner oder gleich 30 phe ist.

5. Reifen nach einem der Ansprüche 1 bis 4, wobei der Gehalt an Naturkautschuk oder synthetischem Polyisopren im Bereich von 20 bis 80 phe liegt und der Gehalt an BR im Bereich von 20 bis 80 phe liegt.

6. Reifen nach Anspruch 5, wobei der Gehalt an Naturkautschuk oder synthetischem Polyisopren im Bereich von 50 bis 80 phe liegt.

7. Reifen nach Anspruch 5 oder 6, wobei der Gehalt an BR im Bereich von 30 bis 50 phe liegt.

8. Reifen nach einem der Ansprüche 1 bis 4, wobei der Gehalt an BR im Bereich von 50 bis 80 phe liegt.

## Claims

1. Tyre intended to be fitted to civil engineering vehicles comprising a sidewall having a rubber composition based on at least a blend of polyisoprene, natural rubber or synthetic polyisoprene, and polybutadiene BR, a reinforcing filler comprising carbon black and silica, a crosslinking system, **characterized in that** the reinforcing filler predominantly comprises silica, that the content of silica ranges from 20 to 40 parts per hundred parts of elastomer, phr, and the content of carbon black is less than or equal to 5 phr and that the total content of reinforcing filler is less than or equal to 45 phr.

2. Tyre according to Claim 1, in which the total content of reinforcing filler is less than or equal to 40 phr.

3. Tyre according to Claim 1, in which the content of silica is less than or equal to 35 phr.

4. Tyre according to Claim 3, in which the content of silica is less than or equal to 30 phr.

5. Tyre according to any one of Claims 1 to 4, in which the content of natural rubber or of synthetic polyisoprene ranges from 20 to 80 phr and the content of BR ranges from 20 to 80 phr.

6. Tyre according to Claim 5, in which the content of natural rubber or of synthetic polyisoprene ranges from 50 to 80 phr.

7. Tyre according to either one of Claims 5 and 6, in which the content of BR ranges from 30 to 50 phr.

8. Tyre according to any one of Claims 1 to 4, in which the content of BR ranges from 50 to 80 phr.
